Europäisches Patentamt

European Patent Office

Office européen des brevets

(11) Veröffentlichungsnummer: **0 243 654**

**A2**

## (12) EUROPÄISCHE PATENTANMELDUNG

(21) Anmeldenummer: **87104028.3**

(22) Anmeldetag: **19.03.87**

(51) Int. Cl.4: **A23L 2/30**

(30) Priorität: **30.04.86 DE 3614656**

(43) Veröffentlichungstag der Anmeldung:
**04.11.87 Patentblatt 87/45**

(84) Benannte Vertragsstaaten:
**AT BE CH DE ES FR GB GR IT LI LU NL SE**

(71) Anmelder: **Pektin-Fabrik Hermann Herbstreith KG**
**Postfach 23 Turnstrasse 37**
**D-7540 Neuenbürg/Württ.(DE)**

(72) Erfinder: **Strohm, Gerhard, Dipl.Önologe**
**Strasse der Republik 34**
**D-6227 Oestrich-Winkel(DE)**
Erfinder: **Wucherpfennig, Karl, Prof. Dr.**
**Dipl.Chem.**
**Riederbergstrasse 81**
**D-6200 Wiesbaden(DE)**
Erfinder: **Otto, Konrad, Dr.**
**Höhestrasse 26**
**D-6380 Bad Homburg(DE)**

(74) Vertreter: **Frank, Gerhard, Dipl.-Phys.**
**Patentanwälte Dr. F. Mayer & G. Frank**
**Westliche 24**
**D-7530 Pforzheim(DE)**

(54) **Verfahren zum Schönen und/oder Klären von aus Pflanzenteilen hergestellten Flüssigkeiten.**

(57) Zum Schönen und/oder Klären von aus Pflanzenteilen hergestellten Flüssigkeiten, insbesondere von fruchthaltigen Getränken oder Konzentraten, werden wasserlöslichen Salze von Pektinstoffen mit einem maximalen Veresterungsgrad von etwa 40%, insbesondere Pektate oder Pektinate, in die auf 35° C bis 85° C erwärmte, zu klärande Flüssigkeit zugegeben.

Bei diesem Verfahren wird nur eine geringe Menge an Pektinsäure bzw. Pektat erforderlich, der Schönungsmittelbedarf liegt in der gleichen Größenordnugn wie bei der klassischen kombinierten Gelatine-Kieselsol-Schönung. Darüberhinaus fallen nicht abgebaute, in den Säften noch vorhandene Pektinstoffe aus, und auf diese Weise lassen sich Enzympräparate einsparen, mit denen diese Polymere ansonsten abgebaut werden müßten, um die Säfte filtierfähig zu machen.

Xerox Copy Centre

# Verfahren zum Schönen und/oder Klären von aus Pflanzenteilen hergestellten Flüssigkeiten.

Die Erfindung betrifft ein Verfahren zum Schönen und/oder Klären von aus Pflanzenteilen hergestellten Flüssigkeiten, insbesondere von fruchthaltigen Getränken und Konzentraten, auf der Basis von Pektinstoffen.

In frisch hergestellten Frucht-und Gemüsesäften und Weinen sind noch unlösliche Fruchfleischteilchen, unlösliche Eiweißstoffe und Eiweiß-Gerbstoff-Verbindungen, aktive Enzyme, lebende und tote Mikroorganismen und zum Teil Salze schwerlöslicher Verbindungen in kristalliner Form sowie andere Substanzen von zum Teil unbekannter Natur suspendiert. Daneben enthalten sie nicht sichtbare hochmolekulare Substanzen oder Aggregate, sogenannte Kolloide, die die Klärung erschweren können.

Suspendierte Feststoffpartikel sind bis auf wenige Ausnahmen von schleimiger, deformierbarer Natur und haben außerordentlich schwankende Partikelgrößen; diese können mehrere Millimeter Durchmesser haben und so klein sein, daß die Teilchengröße an den kolloidalen Bereich grenzt. Kolloidal gelöste Substanzen lassen sich zum Teil durch Enzympräparate zu echt löslichen Substanzen abbauen. Grobe suspendierte Feststoffpartikel lassen sich durch Separieren aus den Getränken entfernen; es verbleiben aber dabei feinste Trubpartikel und die kolloidal gelösten Substanzen im Getränk, die die Filtration erschweren können. Aus diesem Grunde werden diese Stoffe durch Zusatz von Flockungsund Schönungsmittel zum Teil in unlösliche Partikel überführt.

Eine teilweise Entfernung durch Feststoffe mit adsorbierenden Eigenschaften ist ebenfalls möglich. Diese Maßnahme bezeichnet man allgemein als "Schönen". Der Kellerwirtschaft stehen organische und anorganische Schönungsmittel zur Verfügung.

Die Schönung ist eine wirtschaftliche Methode der Getränkevorklärung, die neben einer enzymatischen Behandlung zum Abbau von trubstabilisierenden Polymeren der Vorbereitung und Erleichterung der Filtration dient und die nach Möglichkeit die geruchlichen und geschmacklichen Eigenschaften des Getränkes erhalten bzw. verbessern soll. Die Schönung von Getränken erfolgt heute vorwiegend aus drei Gründen:
-Vorklärung eines Getränkes vor der Filtration
-Entfernung von Stoffen, die zu späteren Trübungen Anlaß geben können
-Verbesserung der geschmacklichen, geruchlichen und farblichen Eigenschaften eines Getränkes
Zur Schönung verwendet man meist Gelatine, Hausenblase. Kasein. Kaliumkaseinate, flüssiges Eiereiweiß (Eiklar), Tannin und Kieselsol. Mit Ausnahme von Tannin und Kieselsol handelt es sich bei den anderen genannten Schönungsmitteln um tierisches Eiweiß, also um Stoffe, die in Frucht-und Gemüsesäften sowie Weinen nicht vorkommen, also artfremd sind. Kieselsol ist ein anorganisches Industrieprodukt und auch nicht mit Getränkeinhaltsstoffen verwandt. Tannin ist zwar ein Pflanzenprodukt, fällt aber bei der Schönung nicht vollständig aus, so daß damit behandelte Getränke einen erhöhten Polyphenolgehalt aufweisen.

In wässriger Lösung tragen die tierischen Eiweiße eine positive Ladung. Im Gegensatz dazu sind die Partikel von Tannin und Kieselsol negativ geladen. - Die in Getränken vorhandenen feinsten Trubpartikel und Kolloide sind überwiegend negativ geladen. Hebt man die Ladungen durch Hinzufügen eines umgekehrt geladenen Kolloids auf, so wird die Abstoßung der gleichsinnig geladenen Kolloidteilchen neutralisiert. Es überwiegt dann die Anziehung; die Teilchen vereinigen sich zu größeren meist traubenförmigen Aggregaten, die in der Flüssigkeit bald zu Boden sinken oder aufschwimmen. Die kolloidale Lösung ist dann aufgeflockt oder koaguliert.

Die klärende Wirkung von Schönungsmitteln beruht aber nicht nur auf Entladungs-und Flockungsvorgängen, sondern an den sich bildenden Trubstoffaggregaten werden noch Stoffe angelagert und somit aus dem Saft entfernt. Bei der Schönung spielen sich daher auch noch Adsorptionsvorgänge ab, bei denen Stoffe mitgerissen werden.

Die in der Praxis üblichen Schönungsverfahren arbeiten alle nach dem Batch-Verfahren. Daraus ergibt sich für Klärschönungen ein gewisser Zeitbedarf, welcher sich zusammensetzt aus der Entstabilisierungzeit und der Flockungs-bzw. Sedimentationszeit. Während die Entstabilisierungsphase bei fast allen Schönungsmitteln schon nach 1/4 bis 1 Stunde beendet ist. benötigt der Flockungs-und Sedimentationsvorgang mehrere Stunden bis Tage.

Die klassische Klärschönung von Saft und Wein ist die kombinierte Gelatine/Kieselsol-Schönung. Der Einsatz von Gelatine und Kieselsol erfordert für jede zu schönende Charge Schöngungsvorversuche, da bei jedem Getränk das optimale Mischungsverhältnis beider Schönungsmittel ermittelt werden muß. Unterbleiben diese Schönungsvorproben bzw. werden sie falsch ausgewertet, so behält das Getränk eine mehr oder weniger starke Resttrübung oder es kommt zu einer Nachtrübung des Saftes oder Weines, welche durch überschüssige Gelatine hervorgerufen wird.

Wird die Schönung bei erhöhter Temperatur durchgeführt, werden größere Mengen an Gelatine (ca. 40g pro hl) und Kieselsol erforderlich. Dadurch ergibt sich die Gefahr der Überschönung durch Gelatine, was zur Folge hat, daß noch zusätzlich Bentonit angewendet werden muß.

Aus der DE-OS 29 19 259 ist das gattungsgemäße Verfahren bekannt, bei dem unmittelbar Pektinsäure als Schönungsmittel verwendet wird, also ein Schönungsmittel, das den Getränkeinhaltsstoffen verwandt ist. Die Pektinsäure wird dabei zunächste in Pulverform im zu schönenden Getränk suspendiert, da sie unlöslich ist.

Anschließend werden Calciumionen zugesetzt, wobei es dann zum sofortigen Ausflocken von Trubbestandteilen und zur vollständigen Klärung der Getränke kommt. Die Calciumionen werden beispielsweise in Form von Calciumcarbonat zugesetzt, das sich im Fruchtsaft und Wein unter Freisetzung von Kohlendioxid löst und den Trub durch Flotation zum Aufschwimmen bringt.

Nachteilig bei diesem vorbekannten Schönungsverfahren ist der relativ hohe Aufwand an Pektinsäure (20-400 g/hl), was etwa der zehnfachen Menge des üblichen Schönungsmittel, wie beispielsweise die Gelatine/Kieselsol-Schönung, entspricht. Weiter tritt durch die Zugabe von Calciumcarbonat eine Entsäuerung ein, die unerwünscht ist. Schließlich erhöht sich dadurch der Gehalt an Calciumionen, was technisch die Gefahr der Nachtrübung der Getränke durch schwerlösliche Calciumsalze nach sich zieht und rechtlich mit der geforderten Naturbelassenheit des Getränks unvereinbar ist.

Darüberhinaus ist der Zusatz von Calciumsalzen zu anderen Säften als Traubensaft gesetzlich nicht zulässig.

Aufgabe der Erfindung ist es daher, das vorbekannte Schönungsmittel und das vorbekannte Schönungsverfahren so zu verbessern, daß der Schönungsmittelbedarf gegenüber der Schönung mit Pektinsäure reduziert wird und die genannten Nachteile vermieden werden.

Zur Lösung dieser Aufgabe wurde überraschend gefunden, daß diese gewünschte Wirkung durch die Zugabe von waserlöslichen Salzen der Pektinsäure, beispielsweise deren Natrium-oder Kaliumsalz, zu der auf 35° C-85° C erwärmte, zu klärende Flüssigkeit erreicht wird.

Stellt man das Natrium-oder Kaliumsalz der Pektinsäure her und löst dieses in Wasser, so erfolgt in Sekundenschnelle ein Ausflocken und eine Koagulation der Trubbestandteile der Getränke und der Safte oder Wein klärt sich vollständig. ohne daß Calciumionen zugegeben werden müssen. Überraschend zeigt sich weiter, daß diese Art der Schönung wesentlich geringere Mengen an Pektinsäure (2-40 g/hl) bzw. Pektat erfordert, als die gemäß DE-OS 29 19 259 vorgeschlagene Methode; der Schönungsmittelbedarf liegt damit in der gleichen Größenordnung wie est bei der klassischen kombinierten Gelatine-Kieselsol-Schönung der Fall ist. Ein weiterer Vorteile der Schönung mit gelösten Pektaten ist das Ausfällen von nicht abgebauten in Säften noch vorhandenen Pektinstoffen. Auf diese Weise lassen sich Enzympräprate einsparen, mit denen diese Polymere abgebaut werden müssen, um die Säfte filtrierfähig zu machen.

Schließlich zeigten die durchgeführten Versuche, daß sich Säfte auch bei 70 - 75° C einwandfrei vollständig klären ließen, was mit den klassischen Schönungsmitteln nicht möglich ist.

Diese Art der Heißschönung ist vor allen Dingen bei der Herstellung von Fruchtsaftkonzentration von Vorteil, da die Säfte nach der Aromagewinnung mit erhöhter Temperatur anfallen und ein Abkühlen auf eine Temperatur für die kombinierte Gelatine-Kieselsol-Schönung unterbleiben kann.

Nach Durchführung der Schönung mit Pektaten und Abtrennung des Schönungstrubes bei erhöhter Temperatur können die Säfte direkt der Eindampfanlage durchgeführt werden. Damit eröffnet sich auch der Weg zur kontinuierlichen Schönung: da die Entstabiliserungsphase und der Flockungsvorgang in außerordentlich kurzer Zeit erfolgen, kann die Trubentfernung durch Flotation kontiniuierlich vor der Filtration vorgenommen werden.

Neben den technischen Vorteilen bietet die Pektatschönung auch Vorteile im Hinblick auf die Stabilität der Säft und Weine: der während der Be- und Verarbeitung in Säfte und Weine gelangende Gehalt an Schwermetallionen wird erniedrigt, da Pektinsäure diese Ionenart bindet und die Getränke auf diese Weise vor Nachtrübungen schützt. Weiter erniedrigt sich der Gehalt an Calciumionen, wodurch verhindert wird, daß in den Getränken - schwerlösliche Calciumsalze auskristallisieren. Schließlich sind auf diese Art geschönte Säfte besser vor Trübungen geschützt, die von Polymeren (z.B. Eiweiß und Polysaccharide) verursacht werden: sie weisen somit eine höhere Stabilität auf.

Gegenüber der Schönung gemäß der DE-OS 29 19 259 ergeben sich somit insgesamt folgende Vorteile:

-Sekundenschnelles Ausflocken der Trubstoffe
-Vollständigere Klärung
-Erniedrigung des Schönungsmittelbedarfes
-Keine Zusätze
-Möglichkeit zur kointinuierlichen Trubabtrennung durch Flotation
-Schutz vor Nachtrübungen und damit bessere Stabilität durch Ausfällen von Schwermetall-und Calciumionen

-Schutz vor Nachtrübungen und damit bessere Stabilität durch Ausfällung von Polymeren wie z.B. Pektin, Eiweiß und anderen Polysacchariden.

Gegenüber der klassischen Klärschönung mittels Kombinatio Gelatine/Kieselsol und gegebenenfalls Bentonit bestehen die wesentlichen Vorteile darin, daß die Schönung mit einem fruchtverwandten Mittel durchgeführt wird, daß nur ein Schönungsmittel erforderlich ist und daß die Schönung bei erhöhter Temperatur erfolgen kann.

Anhand von drei Beispielen wird das erfindungsgemäße Verfahren näher beschrieben:

Beispiel 1

10 l eines nicht enzymierten Fruchtsaftes, in diesem Falle Apfelsaft, wurden auf 50° C erhitzt.

Zu 5 l dieses Saftes wurden unter starkem Rühren 50 ml einer 1% Kaliumpektatlösung zugegeben, entsprechend einer Aurfwandmenge von 10g/hl, die restlichen 5 l wurden mit 15g/hl Gelatine und 30 g/hl Kieselsol geschönt.

Wenige Minuten nach Zugabe des Kaliumgehalts kam es zum vollständigen Ausflocken der Trubphase in der mit Kaliumpektat behandelten Charge, während in der mit Gelatine/Kieselsol behandelten Probe noch keine Flockulation zu beobachten war.

Nach 12 Stunden war der Klärgrad der mit Kaliumpektat geschönten Probe wesentlich höher, gemessen in einem Trübungsmeßgerät, als bei der vergleichsweise durchgeführten Gelatine/Kieselsolschönung. Bei Gelatine/Kieselsolschönnung kann dagegen auf eine Vorenzymierung nicht verzichtet werden, wenn befriedigende Ergebnisse erzielt werden sollen.

Beispiel 2

Es wurde wie in Beispiel 1 vorgegangen, jedoch mit der Abänderung, daß der Saft vor Zugabe der Schönungsmittel mit pektolytischen Enzymen behandelt wurde.

Nach vollständigem Abbau des safteigenen Pektins wurde Kaliumpektat unter starkem Rühren in der in Beispiel 1 genannten Konzentration zudosiert. Neben der sehr viel schnelleren Klärung der mit Kaliumpektat behandelten Probe, ergab sich auch hier ein höherer Klärgrad gegenüber der mit Gelatine/Kieselsol geschönten Charge.

Beispiel 3

10 l eines enzymierten naturtrüben Apfelsaftes wurden bei Raumtemperatur mit 10g/hl Kaliumpektat versetzt, und anschließend unter ständigem Rühren auf 75° erhitzt. Im Vergleich dazu wurde eine Gelatine/Kieselsol-Schönung nach der Praxis üblichen Verfahrensweise durchgeführt.

Mit zunehmender Safttemperatur beschleunigte sich die Flockenbildung in der mit Kaliumpektat geschönten Probe, nach Erreichen der Endtemperatur von 75° wurde der Trub von der Klarphase abzentrifugiert. Der Klärgrad des Überstandes wurde mit einem Trübungsmeßgerät gemessen.

Die mit Kaliumpektat behandelte Probe zeigte deutlich niedrigere Trübungswerte als die vergleichsweise durchgeführte Gelatine/Kieselsolschönung.

**Ansprüche**

1. Verfahren zum Schönen und/oder Klären von aus Pflanzenteilen hergestellten Flüssigkeiten, insbesondere von fruchthaltigen Getränken oder Konzentraten, auf der Basis von Pektinstoffen, gekennzeichnet durch die Zugabe von wasserlöslichen Salzen von Pektinstoffen mit einem maximalen Veresterungsgrad von etwa 40%, insbesondere Pektate oder Pektinate, in die auf 35° C bis 85° C erwärmte, zu klärende Flüssigkeit.

2. Verfahren nach Anspruch 1, dadurch gekennzeichnet, daß die Zugabe von Pektat oder Pektinat in die zu klärende Flüssigkeit kontinuierlich erfolgt und die Trubstoffe kontinuierlich mit den Verfahren der Filtration, Separation und Flotation abgetrennt werden.

3. Verfahren nach Anspruch 1, gekennzeichnet durch die Verwendung von Caliumpektinat oder Caliumpektat.

4. Verfahren nach Anspruch 1 oder 2, gekennzeichnet durch den Zusatz von Pektat/Pektinat in gelöster oder pulvriger Form.

5. Verfahren nach Anspruch 1, dadurch gekennzeichnet, daß der Veresterungsgrad unterhalb von 20% liegt.

6. Verfahren nach Anspruch 1, dadurch gekennzeichnet, daß keine Vorenzymierung durch Zugabe von Enzymen erfolgt.